# EUROPÄISCHE PATENTANMELDUNG

(11) **EP 3 153 788 A1**
(43) Veröffentlichungstag der Anmeldung: **12.04.2017**
(21) Anmeldenummer: 16185423.7
(22) Anmeldetag: 24.08.2016
(51) Int. Cl.: F24F 13/08, F24F 12/00, F24F 7/00

(54) **VORRICHTUNG ZUR BE- UND ENTLÜFTUNG VON GEBÄUDEN**

(30) Priorität: 09.10.2015 DE 202015105359 U
(71) Anmelder: LTM GmbH, 58540 Meinerzhagen (DE)
(72) Erfinder: Grieb, Klaus, 58119 Hagen (DE); Stahlschmidt, Ronald, 58511 Lüdenscheid (DE)
(74) Vertreter: Schmid, Wolfgang

(57) **Zusammenfassung**

Die Erfindung betrifft eine Vorrichtung (1) zur Be- und Entlüftung von Gebäuden, mit einem Gehäuse (3), das eine der Gebäudeinnenseite (4) zugerichtete Öffnung (5) und eine der Gebäudeaußenseite (6) zugerichtete Öffnung (7) aufweist und in dem wenigstens eine Einrichtung (8) zur Erhöhung der Strömungsgeschwindigkeit der Luft und wenigstens ein Wärmespeicherelement (9) angeordnet sind. Wenigstens in einem Wärmespeicherelement (9) ist eine Einrichtung (12) zur Umlenkung der Luftströmung angeordnet, welche wenigstens zwei Sperrelemente (13,14) mit einer Vielzahl von Strömungsöffnungen (15) aufweist, wobei die Sperrelemente (13,14) in Strömungsrichtung (x) der Luft voneinander beabstandet sind, und wobei die Sperrelemente (13,14) derart versetzt zueinander angeordnet sind, dass im Querschnitt der der Gebäudeaußenseite (6) zugerichteten Öffnung (7) betrachtet eine derartige Überdeckung der Sperrelemente (13,14) gegeben ist, dass der gesamte Querschnitt der der Gebäudeaußenseite (6) zugerichteten Öffnung (7) abgedeckt ist.

## Beschreibung

Die Erfindung betrifft eine Vorrichtung zur Be- und Entlüftung von Gebäuden, mit einem Gehäuse, das eine der Gebäudeinnenseite zugerichtete Öffnung und eine der Gebäudeaußenseite zugerichtete Öffnung aufweist und in dem wenigstens eine Einrichtung zur Erhöhung der Strömungsgeschwindigkeit der Luft und wenigstens ein Wärmespeicherelement angeordnet sind.

Gattungsgemäße Vorrichtungen sind aus dem allgemeinen Stand der Technik bekannt. Diese Vorrichtungen werden zur Be- und Entlüftung von Gebäuden eingesetzt, wobei zur Wärmerückgewinnung in dem wenigstens einen Wärmespeicherelement die in der ausströmenden Luft enthaltene thermische Energie gespeichert und, nach Umkehrung der Strömungsrichtung der Luft, an die einströmende Luft abgegeben wird.

Ein Problem bei solchen Vorrichtungen besteht darin, dass durch die zur Gebäudeaußenseite zugerichtete Öffnung Wind einströmen kann, wodurch die in dem Wärmespeicherelement gespeicherte thermische Energie teilweise verlorengehen kann. Dies kann zu einer Verschlechterung des Wirkungsgrads solcher Vorrichtungen führen.

Es ist daher Aufgabe der vorliegenden Erfindung, eine Vorrichtung zur Be- und Entlüftung von Gebäuden zu schaffen, die einen verbesserten Schutz gegen die Einströmung bzw. Einwirkung von Wind durch die der Gebäudeaußenseite zugerichtete Öffnung gewährt.

Erfindungsgemäß wird diese Aufgabe durch die in Anspruch 1 genannten Merkmale gelöst.

Die erfindungsgemäße Einrichtung zur Umlenkung der Luftströmung verhindert ein direktes bzw. gerades Durchströmen der in die der Gebäudeaußenseite zugerichteten Öffnung einströmenden Luft durch das Gehäuse, wodurch insbesondere auf die Gebäudeaußenseite auftreffender Wind daran gehindert wird, auf unkontrollierte Art und Weise in das Gehäuse der erfindungsgemäßen Vorrichtung einzuströmen. Durch diese Abschottung bleibt die in dem wenigstens einen Wärmespeicherelement gespeicherte thermische Energie auch bei starkem Wind erhalten und es wird mittels der Einrichtung zur Umlenkung der Luftströmung eine Verschlechterung des Wirkungsgrads der erfindungsgemäßen Vorrichtung verhindert.

Hierbei sind die Sperrelemente in Strömungsrichtung der Luft voneinander beabstandet und derart versetzt zueinander angeordnet, dass durch eine Addition der Flächen der wenigstens zwei Sperrelemente der komplette Querschnitt der der Gebäudeaußenseite zugerichteten Öffnung verschlossen ist. Durch die versetzte Anordnung der Sperrelemente wird eine gerichtete Luftströmung erzielt, da der Großteil der Luft um die Sperrelemente herum strömt. Ein gewisser Anteil des Luftstroms kann jedoch auch weiterhin durch die sich in den Sperrelementen befindenden Strömungsöffnungen strömen, so dass die Wirksamkeit der erfindungsgemäßen Vorrichtung im Hinblick auf die Be- und Entlüftung des Gebäudes nicht beeinträchtigt wird. Des Weiteren wird durch die erfindungsgemäßen Sperrelemente die Strömungsgeschwindigkeit wesentlich verringert, was zur Verringerung von Druckverlusten führt.

In einer sehr vorteilhaften Weiterbildung der Erfindung kann vorgesehen sein, dass eines der Sperrelemente auf derjenigen Seite des Wärmespeicherelements angeordnet ist, die der der Gebäudeaußenseite zugerichteten Öffnung zugewandt ist, und dass eines der Sperrelemente auf derjenigen Seite des Wärmespeicherelements angeordnet ist, die der der Gebäudeaußenseite zugerichteten Öffnung abgewandt ist. Durch die Anordnung der Sperrelemente bzw. der Einrichtung zur Umlenkung der Luftströmung an der der Gebäudeaußenseite zugerichteten Öffnung wird ein ungewolltes Eindringen von Wind in das Innere des Gehäuses verhindert, so dass die gesamte thermische Energie, die in dem wenigstens einen Wärmespeicherelement gespeichert ist, erhalten bleibt.

Als ein guter Kompromiss hinsichtlich des Verhinderns des Eintretens von Wind in das Gehäuse der erfindungsgemäßen Vorrichtung einerseits und einem wirksamen Betrieb der erfindungsgemäßen Vorrichtung im Hinblick auf die Be- und Entlüftung des Gebäudes hat es sich erwiesen, wenn die Sperrelemente jeweils eine Fläche von 50 bis 75 % der Fläche der der Gebäudeaußenseite zugerichteten Öffnung aufweisen.

Eine konstruktiv sehr einfache und kostengünstig zu realisierende Ausführungsform der Einrichtung zur Umlenkung der Luftströmung ergibt sich, wenn die Sperrelemente als Lochbleche ausgebildet sind.

In einer weiteren vorteilhaften Ausgestaltung der Erfindung kann vorgesehen sein, dass die Strömungsöffnungen eine Fläche von 1 mm² bis 20 mm² aufweisen. Eine derartige Größe der Strömungsöffnungen hat sich im Hinblick auf die oben beschriebene Funktion der erfindungsgemäßen Vorrichtung bei der Verhinderung des Eintretens von Luft in das Gehäuse einerseits und der Aufrechterhaltung der Funktion hinsichtlich der Be- und Entlüftung von Gebäuden andererseits als besonders vorteilhaft erwiesen.

Ähnliche Vorteile im Hinblick auf den Betrieb der erfindungsgemäßen Vorrichtung ergeben sich, wenn die Strömungsöffnungen eine Fläche von 10 bis 25 % der Oberfläche des jeweiligen Sperrelements einnehmen.

Um eine besonders vorteilhafte Durchströmung des wenigstens einen Wärmespeicherelements in Verbindung mit einer guten Speicherung der thermischen Energie zu erreichen, kann des Weiteren vorgesehen sein, dass das wenigstens eine Wärmespeicherelement eine Vielzahl von Plattenelementen aufweist, die derart voneinander beabstandet sind, dass zwischen den Plattenelementen Strömungskanäle gebildet sind.

Wenn in einer weiteren vorteilhaften Ausgestaltung der Erfindung das wenigstens eine Wärmespeicherelement aus einem Aluminium-, Kupfer-, Keramik- und/oder Cordieritwerkstoff besteht, so ergibt sich ein sehr hoher Wirkungsgrad bei der Speicherung der thermischen Energie.

Des Weiteren kann vorgesehen sein, dass mehrere in Strömungsrichtung der Luft durch das Gehäuse hintereinander angeordnete Wärmespeicherelemente vorgesehen sind. Eine höhere Anzahl an Wärmespeicherelementen ermöglicht die Speicherung einer größeren Menge an thermischer Energie und damit einem besseren Wirkungsgrad der erfindungsgemäßen Lösung.

Wenn die Sperrelemente an dem äußeren Wärmespeicherelement angebracht sind, so wird die bestmögliche Wirkung der Einrichtung zur Umlenkung der Luftströmung im Hinblick auf den Erhalt des Wirkungsgrads der erfindungsgemäßen Vorrichtung auch bei höheren Windstärken erreicht.

Um eine besonders einfache Steuerung der Luftströmung zu erreichen, kann die Einrichtung zur Erhöhung der Strömungsgeschwindigkeit der Luft als Ventilator ausgebildet sein.

Nachfolgend ist ein Ausführungsbeispiel der Erfindung anhand der Zeichnung prinzipmäßig dargestellt.

Es zeigt:
- Fig. 1: eine erste perspektivische Ansicht der erfindungsgemäßen Vorrichtung;
- Fig. 2: eine zweite perspektivische Ansicht der erfindungsgemäßen Vorrichtung;
- Fig. 3: eine dritte perspektivische Ansicht der erfindungsgemäßen Vorrichtung;
- Fig. 4: eine vierte perspektivische Ansicht der erfindungsgemäßen Vorrichtung; und
- Fig. 5: eine Seitenansicht der erfindungsgemäßen Vorrichtung.

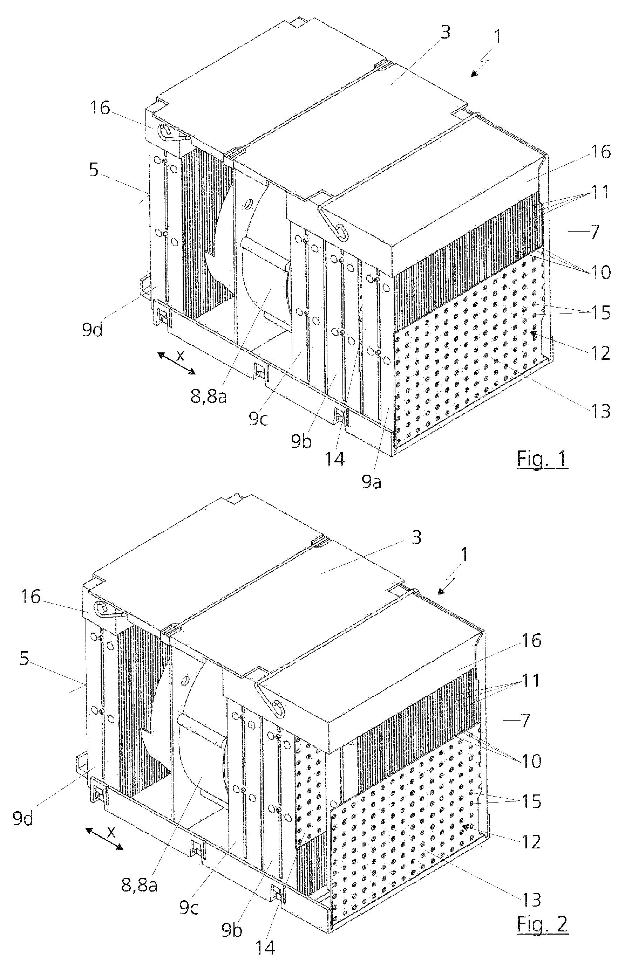

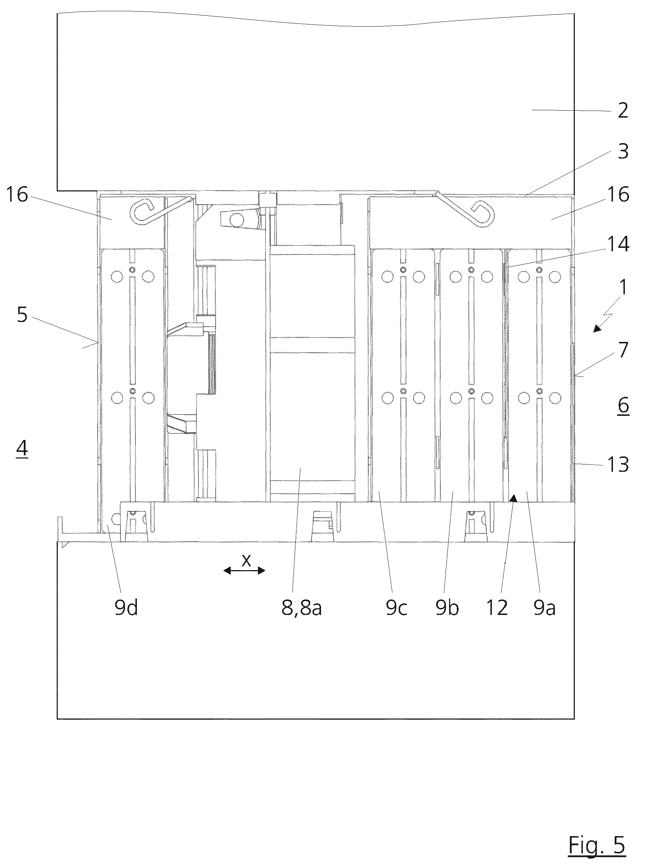

Die Figuren 1 bis 4 zeigen in unterschiedlichen perspektivischen Ansichten und Darstellungsformen eine Vorrichtung 1 zur Be- und Entlüftung von Gebäuden. Von dem Gebäude ist in der Seitenansicht der Vorrichtung 1 gemäß Fig. 5 eine Außenwand 2 dargestellt. Die Vorrichtung 1 weist ein Gehäuse 3 auf, das eine einer in Fig. 5 mit dem Bezugszeichen 4 bezeichneten Gebäudeinnenseite zugerichtete Öffnung 5 und eine einer in Fig. 5 mit dem Bezugszeichen 6 bezeichneten Gebäudeaußenseite zugrichtete Öffnung 7 aufweist. Der Einfachheit halber wird im Folgenden die der Gebäudeinnenseite 4 zugerichtete Öffnung 5 als Innenöffnung 5 und die der Gebäudeaußenseite 6 zugerichtete Öffnung 7 als Außenöffnung 7 bezeichnet.

In dem Gehäuse 3 sind des Weiteren eine Einrichtung 8 zur Erhöhung der Strömungsgeschwindigkeit der durch die Vorrichtung 1 in das Gebäude ein- und aus demselben ausgeleiteten Luft sowie wenigstens ein, im vorliegenden Fall mehrere Wärmespeicherelemente 9 angeordnet. Die Einrichtung 8 zur Erhöhung der Strömungsgeschwindigkeit der Luft ist im vorliegenden Fall als Ventilator 8a ausgebildet, der in nicht dargestellter, jedoch an sich bekannter Weise angesteuert werden kann, um die Strömungsgeschwindigkeit sowie die Strömungsrichtung der Luft durch das Gehäuse 3 zu verändern. Die Strömungsrichtung der Luft durch das Gehäuse 3 ist in den Figuren mit "x" bezeichnet. Während grundsätzlich ein Wärmespeicherelement 9 ausreichend sein kann, sind im vorliegenden Fall vier in Strömungsrichtung x der Luft durch das Gehäuse 3 hintereinander angeordnete Wärmespeicherelemente 9a, 9b, 9c und 9d vorgesehen, von denen die Wärmespeicherelemente 9a, 9b und 9c auf der der Außenöffnung 7 zugerichteten Seite des Ventilators 8a angeordnet sind, wohingegen das Wärmespeicherelement 9d auf der der Innenöffnung 5 des Ventilators 8a zugerichteten Seite angeordnet ist. Die Wärmespeicherelemente sind also in der Richtung von der Außenöffnung 7 zu der Innenöffnung 5 mit den Bezugszeichen 9a, 9b, 9c und 9d bezeichnet.

Die Wärmespeicherelemente 9 weisen in der dargestellten Ausführungsform jeweils eine Vielzahl von Plattenelementen 10 auf, die auch als Lamellen bezeichnet werden können und die so voneinander beabstandet sind, dass sich zwischen den Plattenelementen 10 jeweilige Strömungskanäle 11 bilden, durch die die Luft in der Strömungsrichtung x durch das Gehäuse 3 strömen kann. Die Plattenelemente 10 bestehen im vorliegenden Fall aus einem Aluminium- oder Kupferwerkstoff. Statt der Plattenelemente 10 können auch aus einem Keramik- oder Cordieritwerkstoff bestehende Wärmespeicherelemente 9 eingesetzt werden. Es sind grundsätzlich auch andere Werkstoffe für die Wärmespeicherelemente 9 denkbar.

Der Ventilator 8a wird in bestimmten zeitlichen Abständen alternierend betrieben, um in einem Fall die Luft zum Zwecke der Entlüftung durch die Innenöffnung 5 anzusaugen und durch die Außenöffnung 7 nach außen abzugeben und um im umgekehrten Fall die Luft zum Zwecke der Belüftung durch die Außenöffnung 7 anzusaugen und durch die Innenöffnung 5 an das Gebäude abzugeben. Das Umschalten zwischen den beiden Betriebsarten kann beispielsweise alle 50 Sekunden vorgenommen werden. Beim Entlüften wird die in dem Gebäude enthaltene thermische Energie in den Wärmespeicherelementen 9a, 9b, 9c und 9d gespeichert und beim Belüften an die in das Gebäude einströmende Luft abgegeben. Dadurch wird also die in das Gebäude einströmende Außenluft vorgeheizt.

Um zu verhindern, dass stärkere Windströmungen von außerhalb des Gebäudes in das Gehäuse 3 der Vorrichtung 1 eindringen können, ist an einem der Wärmespeicherelemente 9, im vorliegenden Fall an dem benachbart zu der Außenöffnung 7 angeordneten, äußeren Wärmespeicherelement 9a, eine Einrichtung 12 vorgesehen, die zur Umlenkung der Luftströmung dient. Die Einrichtung 12 weist im vorliegenden Fall zwei Sperrelemente 13 und 14 auf, die jeweils eine Vielzahl von Strömungsöffnungen 15 aufweisen. Die Sperrelemente 13 und 14 sind in Strömungsrichtung x der Luft voneinander beabstandet und sie sind derart versetzt zueinander angeordnet, dass im Querschnitt der Außenöffnung 7 betrachtet eine derartige Überdeckung der Sperrelemente 13 und 14 gegeben ist, dass der gesamte Querschnitt der Außenöffnung 7 abgedeckt ist. Im vorliegenden Fall ist eines der Sperrelemente, nämlich das Sperrelement 13, auf derjenigen Seite des Wärmespeicherelements 9a angeordnet, die der Außenöffnung 7 zugewandt ist. Das andere Sperrelement, nämlich das Sperrelement 14, ist auf derjenigen Seite des Wärmespeicherelements 9a angeordnet, die der Außenöffnung 7 abgewandt bzw. der Innenöffnung 5 zugewandt ist. Die Sperrelemente 13 und 14 können mechanisch mit dem äußeren Wärmespeicherelement 9a verbunden sein. Hierzu kann auf bekannte Befestigungselemente zurückgegriffen werden. Oberhalb der Wärmespeicherelemente 9a, 9b, 9c und 9d befinden sich außerdem Dämmelemente 16, die beispielsweise aus Schaumstoff bestehen können.

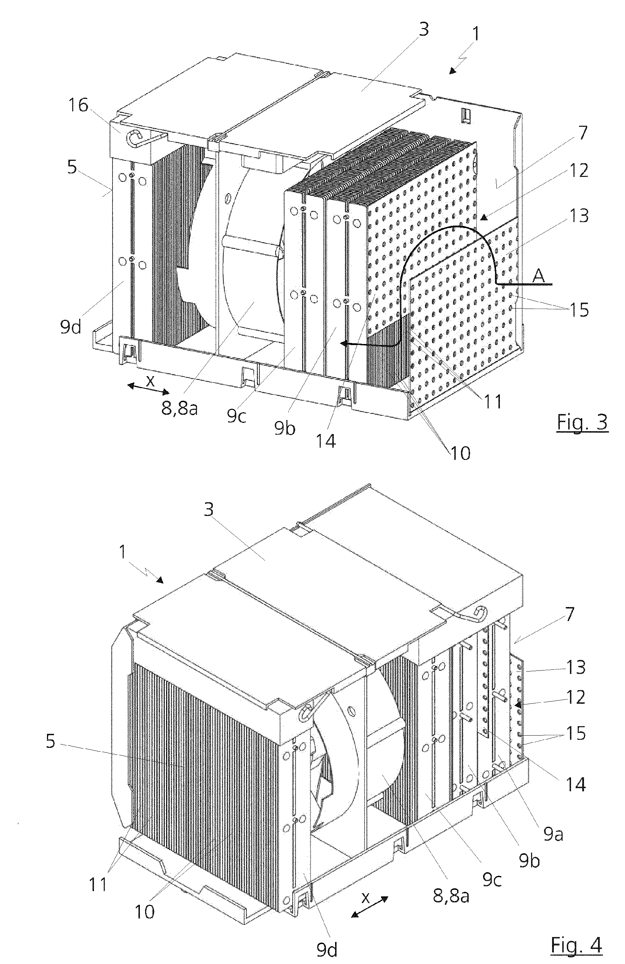

Während in Fig. 1 lediglich Teile des Gehäuses 3 weggelassen sind, ist in der Darstellung gemäß Fig. 2 ein Teil des äußeren Wärmespeicherelements 9a weggeschnitten, um das innere Sperrelement 14 besser darstellen zu können. Das Gehäuse 3 ist also nicht wie in den Figuren dargestellt nur an der Oberseite, sondern auch in den jeweiligen seitlichen Bereichen geschlossen. In der Darstellung gemäß Fig. 3 ist das äußere Wärmespeicherelement 9a komplett weggelassen. Insbesondere in dieser Darstellung ist zu erkennen, dass sich durch die beschriebene Anordnung der die Einrichtung 12 zur Umlenkung der Luftströmung bildenden Sperrelemente 13 und 14 eine Umlenkung der Luftströmung in das Gehäuse 3 der Vorrichtung 1 ergibt. Der Verlauf der Luftströmung ist durch den mit "A" bezeichneten Pfeil in Fig. 3 angedeutet. Des Weiteren ist in Fig. 3 zu erkennen, dass die Sperrelemente 13 und 14 über die gesamte Breite der Öffnungen 5 und 7 verlaufen und jeweils eine Höhe von 50 bis 75 % der Höhe der Außenöffnung 7 aufweisen. Hierbei ist in einem mittleren Bereich eine Überlappung der Sperrelemente 13 und 14 gegeben. Auch in der Darstellung von Fig. 4, bei der das innere Wärmespeicherelement 9d im Vordergrund dargestellt ist, kann das Höhenverhältnis der beiden Sperrelemente 13 und 14 erkannt werden.

Die Sperrelemente 13 und 14 sind im vorliegenden Fall als Lochbleche ausgebildet und die Strömungsöffnungen 15 derselben weisen eine Fläche von 1 mm² bis 20 mm² auf. Diese Größe der Strömungsöffnungen 15 kann von der Größe des Querschnitts des Gehäuses 3 bzw. der Größe der Außenöffnung 7 abhängig sein und sich damit verändern. Selbstverständlich können die Strömungsöffnungen 15 auch andere Querschnitte als den im vorliegenden Fall dargestellten runden Querschnitt aufweisen. In dem dargestellten Ausführungsbeispiel nehmen die Strömungsöffnungen 15 eine Fläche von 10 bis 25 % der Oberfläche des jeweiligen Sperrelements 13 bzw. 14 ein.

Grundsätzlich wäre es auch möglich, die Einrichtung 12 zusätzlich oder alternativ an einem der Wärmespeicherelemente 9b, 9c und/oder 9d anzubringen. Durch die Anordnung der Einrichtung 12 an dem äußeren Wärmespeicherelement 9a wird jedoch die bestmögliche Wirkung erreicht. Im Falle einer größeren Anzahl an Sperrelementen 13 und 14 könnte es erforderlich sein, einen leistungsstärkeren Ventilator 8a einzusetzen.

In nicht dargestellter Weise könnten die Sperrelemente 13 und 14 auch so angeordnet sein, dass sie über die gesamte Höhe der Öffnungen 5 und 7 und nicht wie im vorliegenden Fall über die gesamte Breite derselben verlaufen. In diesem Fall könnte vorgesehen sein, die Sperrelemente 13 und 14 nicht über die gesamte Breite der Öffnungen 5 und 7 verlaufen zu lassen, um einen direkten Zugang der Luftströmung zu den Strömungskanäle 11 zu gewährleisten. Auch andere Möglichkeiten der Ausführung der beiden Sperrelemente 13 und 14 sind denkbar, bei denen eine solche Überdeckung derselben gegeben ist, dass der gesamte Querschnitt der Außenöffnung 7 abgedeckt ist, beispielsweise indem eines der Sperrelemente 13 oder 14 einen äußeren Bereich und das anderen Sperrelemente 14 oder 13 einen inneren Bereich der Außenöffnung 7 abdeckt.

## Patentansprüche

1. Vorrichtung (1) zur Be- und Entlüftung von Gebäuden, mit einem Gehäuse (3), das eine der Gebäudeinnenseite (4) zugerichtete Öffnung (5) und eine der Gebäudeaußenseite (6) zugerichtete Öffnung (7) aufweist und in dem wenigstens eine Einrichtung (8) zur Erhöhung der Strömungsgeschwindigkeit der Luft und wenigstens ein Wärmespeicherelement (9) angeordnet sind,
**dadurch gekennzeichnet, dass** an dem wenigstens einen Wärmespeicherelement (9) eine Einrichtung (12) zur Umlenkung der Luftströmung angeordnet ist, welche wenigstens zwei Sperrelemente (13,14) mit einer Vielzahl von Strömungsöffnungen (15) aufweist, wobei die Sperrelemente (13,14) in Strömungsrichtung (x) der Luft voneinander beabstandet sind, und wobei die Sperrelemente (13,14) derart versetzt zueinander angeordnet sind, dass im Querschnitt der der Gebäudeaußenseite (6) zugerichteten Öffnung (7) betrachtet eine derartige Überdeckung der Sperrelemente (13,14) gegeben ist, dass der gesamte Querschnitt der der Gebäudeaußenseite (6) zugerichteten Öffnung (7) abgedeckt ist.

2. Vorrichtung (1) nach Anspruch 1,
**dadurch gekennzeichnet, dass** eines der Sperrelemente (13) auf derjenigen Seite des Wärmespeicherelements (9) angeordnet ist, die der der Gebäudeau βenseite (6) zugerichteten Öffnung (7) zugewandt ist, und dass eines der Sperrelemente (14) auf derjenigen Seite des Wärmespeicherelements (9) angeordnet ist, die der der Gebäudeaußenseite (6) zugerichteten Öffnung (7) abgewandt ist.

3. Vorrichtung (1) nach Anspruch 1 oder 2,
**dadurch gekennzeichnet, dass** die Sperrelemente (13,14) jeweils eine Fläche von 50 bis 75 % der Fläche der der Gebäudeaußenseite (6) zugerichteten Öffnung (7) aufweisen.

4. Vorrichtung (1) nach Anspruch 1, 2 oder 3,
**dadurch gekennzeichnet, dass** die Sperrelemente (13,14) als Lochbleche ausgebildet sind.

5. Vorrichtung (1) nach einem der Ansprüche 1 bis 4,
**dadurch gekennzeichnet, dass** die Strömungsöffnungen (15) eine Fläche von 1 mm² bis 20 mm² aufweisen.

6. Vorrichtung (1) nach einem der Ansprüche 1 bis 5,
**dadurch gekennzeichnet, dass** die Strömungsöffnungen (15) eine Fläche von 10 bis 25 % der Oberfläche des jeweiligen Sperrelements (13,14) einnehmen.

7. Vorrichtung (1) nach einem der Ansprüche 1 bis 6,
**dadurch gekennzeichnet, dass** das wenigstens eine Wärmespeicherelement (9) eine Vielzahl von Plattenelementen (10) aufweist, die derart voneinander beabstandet sind, dass zwischen den Plattenelementen (10) Strömungskanäle (11) gebildet sind.

8. Vorrichtung (1) nach Anspruch 7,
**dadurch gekennzeichnet, dass** das wenigstens eine Wärmespeicherelement (9) aus einem Aluminium-, Kupfer-, Keramik- und/oder Cordieritwerkstoff besteht.

9. Vorrichtung (1) nach einem der Ansprüche 1 bis 8,
**dadurch gekennzeichnet, dass** mehrere in Strömungsrichtung der Luft durch das Gehäuse (3) hintereinander angeordnete Wärmespeicherelemente (9,9a,9b,9c,9d) vorgesehen sind.

10. Vorrichtung (1) nach Anspruch 9,
**dadurch gekennzeichnet, dass** die Sperrelemente (13,14) an dem äußeren Wärmespeicherelement (9a) angebracht sind.

11. Vorrichtung (1) nach einem der Ansprüche 1 bis 10,
**dadurch gekennzeichnet, dass** die Einrichtung (8) zur Erhöhung der Strömungsgeschwindigkeit der Luft als Ventilator (8a) ausgebildet ist.
